Europäisches Patentamt

European Patent Office

Office européen des brevets

(11) Publication number: **0 281 194**
**A2**

# EUROPEAN PATENT APPLICATION

(21) Application number: **88200342.9**

(22) Date of filing: **25.02.88**

(51) Int. Cl.⁴: **G01N 27/46**

(30) Priority: **03.03.87 NL 8700509**

(43) Date of publication of application:
**07.09.88 Bulletin 88/36**

(84) Designated Contracting States:
**AT BE CH DE ES FR GB GR IT LI LU NL SE**

(71) Applicant: **Yokogawa Electrofact B.V.**
**Radiumweg 30**
**NL-3812 RA Amersfoort(NL)**

(72) Inventor: **Beijk, Jozeph Michael, Ir.**
**van Tuyllstraat 1A**
**NL-3829 AA Hooglanderveen(NL)**

(74) Representative: **de Wit, Gerard Frederik, Ir. et al**
**Octrooi- en Merkenbureau De Wit B.V.**
**Breitnerlaan 146**
**NL-2596 HG Den Haag(NL)**

(54) **Method and device for testing ion sensitive electrodes and system for monitoring of an ion concentration.**

(57) A method and device for determining the response time of an electrode (4) for measuring an ion concentration in a liquid medium, in which in the vicinity (at 16) of the electrode during an injection period a liquid is injected having a concentration of said ion which differs from the concentration in the liquid medium, the output of the electrode being measured after stopping the injection, the time ($h_1, h_2$) necessary to restore the electrode output to a predetermined fraction of the output difference at the start and the end of the injection period being used as a measure of the response time.

FIG. 1

EP 0 281 194 A2

## Method and device for testing ion sensitive electrodes and system for monitoring of an ion concentration.

Ion sensitive electrodes are used on a large scale for determining the concentration of $H^+$ ions or the concentration of other ions, such as $Cl^-$ ions in a liquid medium.

Such electrodes generally are reasonably stable, but nevertheless faulty readings are possible.

A type of failure of ion sensitive electrodes consists in an increase of the response time. Such an increase induces a delay in signalling concentration variations, which fact not only reduces the reliability of the measurement, but also may cause a late or insufficient reaction in for instance an automatic process control.

The occurrence of increased reaction times may be due to many causes, such as foiling or leaching of certain ions from the electrode composition, which may for instance depend on the medium contacting the electrode, the temperature and the flow condition around the electrode. Also it is possible that different electrodes manufactured in the same way from identical base materials behave differently.

For these and other reasons it is desirable to provide a method to determine the response time of ion sensitive electrodes in a quick and reliable way.

Up till now such response times were measured by positioning the electrode in measuring relation with a liquid having a known concentration of the ion for which the electrode is sensitive, waiting until the output voltage of the electrode is reasonably constant, measuring or memorizing this output, removing the electrode from the said liquid, preferably rinsing it and positioning it in measuring relation with a second liquid having a different concentration of the said ion and measuring the time needed to have the electrode indicate the output corresponding to the concentration in the second liquid.

If the electrode was in use such a measurement or test of the response time provokes a rather long period of non-use of the electrode and requires several manipulations such as removal and remounting of the electrode. A further draw-back is, that individual electrodes may have somewhat different output voltages in the same liquid for which reason they have to be calibrated. If, however, the equilibrium output voltage is not known one has to wait until the output voltage is reasobly constant. This means a further increase of the period needed for the test.

A first object of the invention is to decrease the time necessary for the test.

A further object is to allow in many instances to maintain the electrode in the liquid it monitored before the test and will monitor again after the test.

Still a further object is to avoid or minimize manipulation of the electrode during the test.

The above objects are attained by the method of claim 1 and the device of claim 8.

GB-A-2 110 382 shows a method and device for clearing a sensor surface by periodically blowing tangentially arranged air jets. During the occurrence of such jets an oxygen sensor can be calibrated on base of the known oxygen content. No measurement of response time is provided.

DE-A-3 118 522 shows a fault detection system in which the response of an electrode, when in contact with a calibration fluid is ascertained and compared to a predetermined standard.

An analogous system has been shown in US-A-4 039 933, in which the results of the comparation are used for calibrating the electrode. If no acceptable value of the electrode output is obtained in a predetermined time period, an error indication is issued. In these three latter systems interfering factors, such as variation in the composition of the calibration liquid, the temperature or the adjustment of the comparator device leads to a fault indication, whereas the electrode per se is quite in order. With the invention such error sources are self compensating.

In Patent Abstracts of Japan. vol. 9, no. 129 (P-361) [1852], 5th June 1985; & JP-A-60 13 254 one differentiates the voltage excursion occurring after the electrode changed over between solutions having different concentrations. The differentiated voltage value gives only a rough indication of the response time, because it is also dependent on the difference between the two stable voltages allotted to the solutions having different concentrations, whereas capacitive components also influence the outcome.

It is remarked that for other purposes it is known to temporarily inject a liquid in the liquid contacting the electrode. A first example is the so-called Flow Injection Analysis, originally introduced by Prof. J.Ruzicka. This analysis consists of injecting a predetermined quantity of liquid to be monitored in a flow of an inert liquid ahead of the location where this flow contacts the electrode. The voltage excursion or pulse when the injected quantity of liquid passes the electrode is a measure for the sought ion concentration. The interval between two injections is limited by the response time of the electrode. In order to check the electrode it is possible to inject a standard or calibration liquid. Any variation of the electrode output voltage pulse caused by an injection of calibration liquid cannot be interpreted in terms of response time only, because variation of sensitivity can give the same readings as occur with response time variations.

Further this type of analysis has an inherently slow reaction, because samples of the liquid to be monitored can only be injected with time intervals adapted to the (esteemed) electrode response time.

Another known injection of a liquid having a different ion concentration consists in injecting a cleaning liquid, such as an acid to dissolve deposits on the electrode. When doing so, the output of the electrode was neglected or disconnected.

With the invention any influence of the sensitivity of the electrode or the voltage excursion caused by the injected liquid is cancelled, because of the predetermined fraction of the voltage excursion which is used to determine the response time.

Normally the response time of an electrode of the considered type is of the order of ten or more times the time period needed to let the injection liquid leave the immediate surroundings of the electrode, so that the measurement of the invention is sufficiently exact to provide a reliable check. When one wants to increase the exactitude it is possible to determine in an actual monitoring system the time period any liquid needs to be removed from the electrode, for instance on base of the prevailing flow conditions. This time period can then be subtracted from the measured value.

The said predetermined fraction normally is about 50 per cent but may be shorter if short interruption periods of the monitoring function are allowed and longer if that is permissible and desirable.

When varying the concentration to which the electrode is exposed the electrode internally is not completely at equilibrium, so that a different situation may prevail when a certain output voltage is reached at the spur of the moment or already existed a long time.

Accordingly a preferred embodiment of the invention provides that the injection period is long enough to make the electrode output voltage constant.

This result may be obtained by a predetermined injection period, which ensures under all conditions the obtaining of an almost constant electrode output voltage, but in order to combine this result of constant output with a minimum time period to reach it, one may provide that during the injection period the electrode output voltage is monitored and that the injection period is terminated when the electrode output voltage is constant.

In order to reduce the time necessary for the injection liquid to reach and to leave the electrode, it may be provided that the measuring liquid moves with respect to the electrode and that the addition of the liquid injection occurs at a location where the measuring liquid moves toward the electrode. This can be attained in several ways, for instance by placing the electrode in a tube in which a processor sewage liquid flows, which tube may be the main duct or an auxiliary by-pass, or by placing it in a vessel or container in which a liquid movement or agitation is maintained, by placing it in a duct connected with both ends to a vessel or container and provided with means to propel the liquid or by moving the electrode itself. In all cases an injection means should be mounted ahead of the electrode and/or at a very small distance from it.

Preferably the measuring liquid is the liquid to be monitored by the electrode. If, however, in the actual process the liquid to be monitored is not compatible with the injection liquid, it is possible to remove the electrode and put it in a measuring liquid, which preferably has about the same concentration of the concerned ions as has the monitored liquid. Other solutions consist in venting the liquid contaminated with the injection liquid or to replace the monitored liquid in contact with the electrode by a measuring liquid. Both solutions have the advantage to permit the electrode to remain on its place, whereas the first one has the advantage of no time loss due to adaption to the measuring liquid and the second one restricts the lost quantity of process liquid. In case the injection liquid is acid or alkaline a solution may be provided by neutralizing the injection liquid downstream the electrode.

The invention also includes a device for applying the method to an electrode mounted in a liquid vessel, provided with a processor for processing the output values of the electrode, which device is characterized in that an injection means for injecting an injection liquid into a measuring liquid in the vessel and control means for controlling the injection means, the processor being adapted to activate and de-activate the control means and to memorize the electrode output voltages at the start and the end of the activity of the injection means and to memorize the time dependent electrode output voltages after the end of the injection period to determine the recovery period necessary for recovering of the electrode output voltage to a predetermined extend and means to transmit and/or indicate the recovery period or a value related to it.

Such a device may be adapted to monitor the electrode voltage during the injection period and to activate or de-activate the control means accordingly. It is also possible to provide it with a time determining device to ensure a predetermined injection period.

In a device according to the invention a processor of known design may be used provided it is programmed or adapted to carry out the inventive method.

Accordingly the invention encompasses a system for monitoring an ion concentration in a liquid having means adapted to contain the liquid, an ion sensitive electrode in said means, a means for moving the liquid with respect to the electrode and injection means for injecting an injection liquid ahead of said electrode, which system is characterized in that a control means for said injection means is present, a data processor connected to a means for digitalizing the output voltage of the electrode, which data processor further is provided with or connected to a clock means for controlling said control means, said processor being adapted to carry out the inventive method and to indicated the determined response time.

The invention is elucidated on hand of the drawings, in which:

Figure 1 shows a scheme of an embodiment of a device according to the invention, and

Figure 2 is a diagram, showing a graph of a pH value as a function of time.

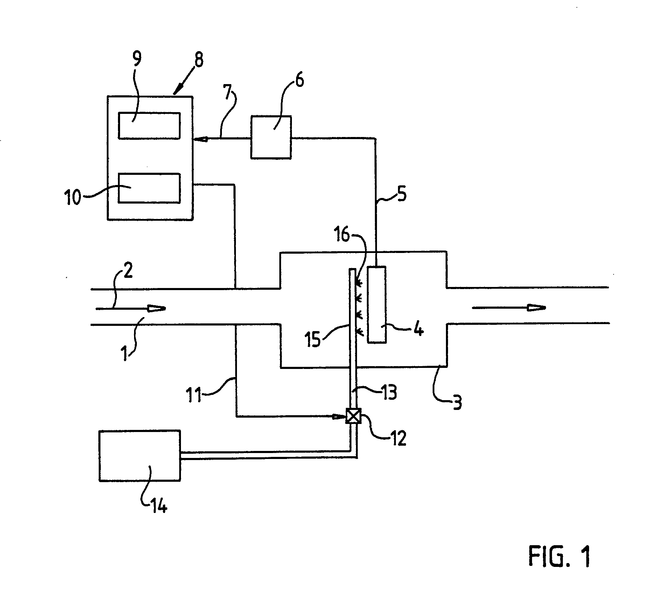

In fig. 1 reference 1 indicates a duct in which a liquid flows in the direction of arrow 2. This liquid may be sewage, a process liquid or free water to be tested on pollution.

The liquid enters a vessel 3 provided with an ion sensitive electrode 4, the output 5 of which is connected to a voltage measuring instrument 6 with a digital output 7 connected to a processor 8. This processor may be of any type but should have a memory for electrode output values entered at 7 and a clock means for ascertaining time periods, for instance the time period lapsed since the end of the injection period. Schematically the clock means is indicated with reference 9 and the memory with 10. Of course the processor should further have a program memory, control and calculating elements and means for outputting any ascertained value, but all these and other components are considered to be encompassed by the term processor. Further for the method according to the invention it is of no importance, whether the processor is a microprocessor or a computing system performing also many other tasks.

The processor further has an output 11 for activating or de-activating a valve 12 mounted in an injection duct 13, connected to one side to a stock 14 of injection liquid and at the other side to a distribution member 15 having a number of outlets 16 opposite the electrode 4.

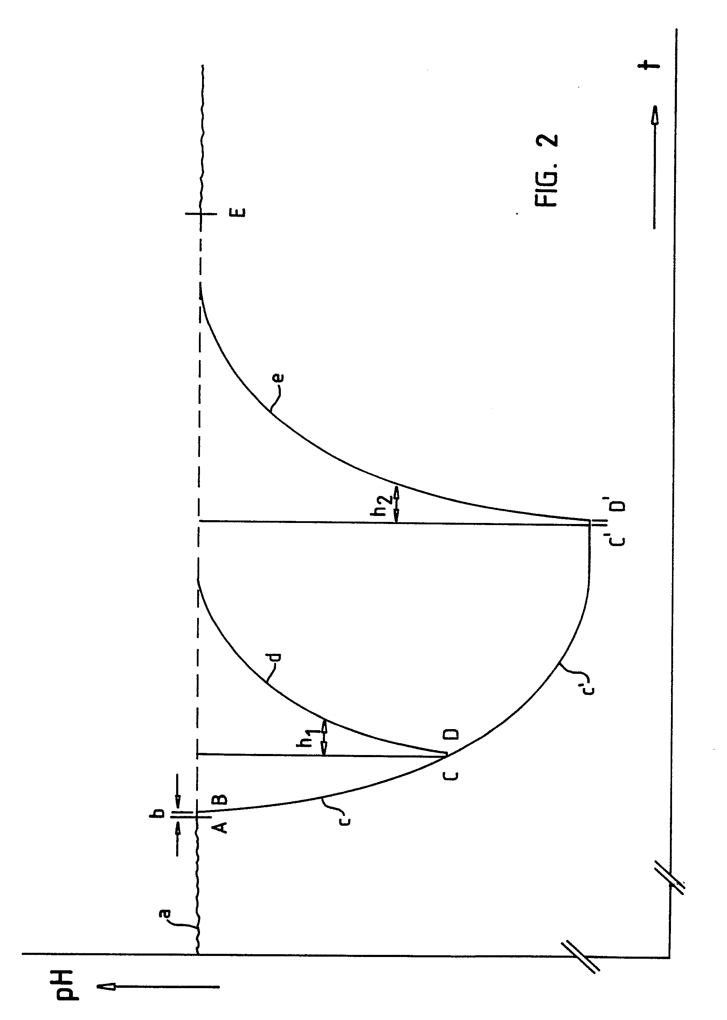

Fig. 2 shows a graph of the voltage on lead 5 as a function of time.

In the period a the pH value varies in dependence on the pH value of the liquid in vessel 3.

At the moment A valve 12 is activated to pass injection liquid from stock 14 to distribution member 15 and outlets 16.

In the time period b from A to B the injection liquid reaches the electrode 4. In the shown embodiment the injection liquid is an acid, so that the indicated pH value decreases quickly as shown by curve c.

According to a first case the value 12 is closed at the moment C. After a period C-D roughly corresponding to the period b the pH value increases according to curve d. When it is halfway to reach again its value before the injection liquid is injected the time period $h_1$ is determined. This period $h_1$ is a measure for the response time of the electrode. In fact the time C-D should be subtracted, but because this time is about one tenth of $h_1$ this is normally not necessary.

A second case is shown, in which the injection period is prolonged to point C'. The curve c' makes it clear, that equilibrium is reached and that the measured pH value does not vary the last part of curve c'.

The time period C'-D' again corresponds to the period b.

The response time $h_2$ is determined halfway the pH recursion from D' to E. It is remarked that $H_1$ and $h_2$ are equal, at least approximately. The interrupted line B-E is not an actual measured pH value, but the value kept in the memory 10.

In fig. 2 the lines C-D and C'-D' are shown as horizontal straight lines, but in actual practice C-D has a tendency to be bent downward, due to a sustained influence of the injection liquid, which influence for C'-D' will not occur because of the equilibrium reached in the last part of curve c', so that C'-D' in fact will slope a little upward. Because C-D and C'-D' are small in comparison to $h_1$ or $h_2$ and the average steepness of the line C-D or C'-D' is far less than that of the curve d or e, it is permissible to determine $h_1$ and $h_2$ halfway between the interrupted line B-E and C and C' respectively.

If the time value b or A-B is known C-D and C'-D' may be considered to equal b. The value of b can easily be determined by an exact measurement of the pH value in the period immediately after the opening of valve 12.

## Claims

1. Method for determining or testing the response time of an ion sensitive electrode (4) in which the electrode is sequentially positioned in measuring relation with one or more liquids containing differing concentrations of an ion for which the electrode is sensitive and the output voltage of the electrode is determined as a function of time, from which time dependent output voltage the response time of the electrode is determined, characterized in that the electrode is kept in measuring relation with a measuring liquid and that during an injection period an injection liquid is added in the vicinity (at 16) of the electrode (4), said injection liquid having a concentration of said ion, which differs from the concentration of said ion in the measuring liquid, determining the output of the electrode at the start and at the end of the said injection period, measuring the difference between said outputs, monitoring after the end of the injection period the recovery of the output as a function of time and determining the recovery period ($h_1$, $h_2$) in which a recovery of a predetermined fraction of said difference has occurred, said recovery period being a measure for the response time of the electrode.

2. Method according to claim 1, characterized in that said predetermined fraction is between 30 and 80 per cent, preferably between 40 and 60 and still more preferably between 45 and 55 per cent.

3. Method according to claim 1 or 2, characterized in that the injection period is long enough to make the electrode output voltage constant.

4. Method according to claim 3 characterized in that during the injection period the electrode output voltage is monitored and that the injection period is determined when the electrode output voltage is constant.

5. Method according to one or more of the claim 1-3, characterized in that the measuring liquid moves with respect to the electrode and that the injection of the injection liquid occurs at a location (at 10) where the measuring liquid moves toward the electrode.

6. Method according to one or more of the preceding claims, characterized in that the measuring liquid is the liquid to be monitored by the electrode.

7. Method according to any of the preceding claims, characterized in that a predetermined duration (C-D;C'-D') which is dependent on the relative flow conditions of liquid and electrode is subtracted from the recovery period.

8. Device for applying the method according to one or more of the preceding claims to an electrode (4) mounted in a liquid vessel (3), provided with a processor (8) for processing the output values of the electrode, characterized by an injection means (15,16) for injecting an injection liquid into a measuring liquid in the vessel and control means (11,12) for controlling the injections means, the processor being adapted to activate and de-activate the control means and to memorize the electrode output voltages at the start and the end of the activity of the injections means and to memorize the time dependent electrode output voltages after the end of the injection period to determine the recovery period necessary for recovering of the electrode output voltage to a predetermined extend and means to transmit and/or indicate the recovery period or a value related to it.

9. Device according to claim 8, characterized in that the processor is adapted to monitor and memorize the electrode output voltages during the injection period to determine whether the output value is constant and to de-activate the control means when such constancy has been detected.

10. Device according to claim 8, characterized in that a time determining means (9) is present to activate and de-activate the control means.

11. A system for monitoring an ion concentration in a liquid having means (3) adapted to contain the liquid, an ion sensitive electrode (4) in said means, means for moving the liquid with respect to said electrode and injection means (15,16) for injection an injection liquid ahead op said electrode characterized by a control means (11,12) for said injection means, a data processor (8) connected to a means (6) for digitalizing the output voltage of the electrode, which data processor further is provided with or connected to a clock means (9) for controlling said control means (11,12), said processor being adapted to carry out the method of claim 1 and to indicate the predetermined response time.

FIG. 1

FIG. 2

0 281 194